# EUROPEAN PATENT APPLICATION

(11) **EP 4 793 316 A1**
(43) Date of publication of application: **19.08.2026**
(21) Application number: 24876918.4
(22) Date of filing: 25.07.2024
(51) Int. Cl.: C08L 33/26, C08K 5/544, C09D 133/26

(54) **HYDROPHILIC COMPOSITION**

(30) Priority: 12.10.2023 JP 2023176763
(71) Applicant: Shin-Etsu Chemical Co., Ltd., Chiyoda-ku Tokyo 100-0005 (JP)
(72) Inventor: TAKAGI, Kazunori, Annaka-shi, Gunma 379-0224 (JP); HIROKAMI, Munenao, Annaka-shi, Gunma 379-0224 (JP)
(74) Representative: Mewburn Ellis LLP
(86) International application number: PCT/JP2024/026575
(87) International publication number: WO 2025/079317

(57) **Abstract**

A hydrophilic composition containing
(A) 100 mass parts of a hydrophilic copolymer containing structural units represented by formula (1) and structural units represented by formula (2) and
(B) 0.001-10 mass parts of a blocked isocyanate silane compound yields a coating film having exceptional hydrophilicity, anti-fogging properties, and water resistance. 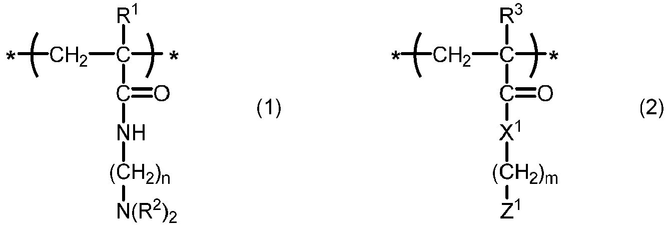 [In formula (1), R¹ represents a hydrogen atom or a methyl group, R² each independently represent a C1-6 alkyl group, and n represents an integer of 1-6.
In formula (2), R³ represents a hydrogen atom or a methyl group, X¹ represents -NH- or -O-, Z¹ represents a hydrogen atom, a methyl group, a hydroxyl group, a carboxy group, or an amino group, and m represents an integer of 0-10 (however, when m is 0, Z¹ is a hydrogen atom or a methyl group.) An asterisk * represents bonding to an adjacent structural unit.]

## Description

### TECHNICAL FIELD

The present invention relates to a hydrophilic composition, a coating agent, a hydrophilic film and a coated article.

### BACKGROUND ART

In recent years, there has been an increasing demand for improvement in fogging of substrates formed of organic materials such as plastics and inorganic materials such as glass.

Improvement in fogging of substrates is generally achieved by coating the surface of a substrate with a hydrophilic film. For example, Patent Document 1 proposes, as a coating agent capable of imparting hydrophilicity to a substrate, a coating composition containing a hydrophilic copolymer having a highly hydrophilic quaternary ammonium salt structure.

However, a coating film formed of the above coating composition does not have sufficient water resistance, and in some cases, when coming into contact with water, the surface properties such as hydrophilicity and fog resistance may deteriorate. Thus, further improvement has been desired.

### PRIOR ART DOCUMENT

### PATENT DOCUMENT

Patent Document 1: JP-A 2018-162431

### SUMMARY OF INVENTION

### TECHNICAL PROBLEM

The present invention has been made in view of the above circumstances. An object of the present invention is to provide a hydrophilic composition (coating agent) containing a hydrophilic copolymer that provides a coating film excellent in hydrophilicity, fog resistance and water resistance, a hydrophilic film obtained therefrom, and a coated article including the coating film.

### SOLUTION TO PROBLEM

The inventors of the present invention have conducted extensive studies to achieve the above object, and have found that a composition containing a specific hydrophilic copolymer and a specific blocked isocyanate silane compound has excellent water resistance and provides a coating film capable of imparting sustained hydrophilicity and fog resistance to substrates formed of organic materials such as plastics and inorganic materials such as glass, thereby completing the present invention.

That is, the present invention provides:
1. A hydrophilic composition including:
   (A) 100 parts by weight of a hydrophilic copolymer containing a constitutional unit represented by formula (1) below and a constitutional unit represented by formula (2) below, and
   (B) 0.001 to 10 parts by weight of a blocked isocyanate silane compound, 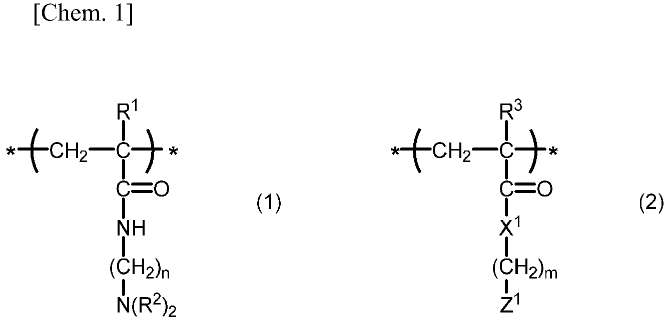 wherein, in formula (1), R¹ represents a hydrogen atom or a methyl group, each R² independently represents an alkyl group having 1 to 6 carbon atoms, and n represents an integer of 1 to 6;
   in formula (2), R³ represents a hydrogen atom or a methyl group, X¹ represents -NH- or -O-, Z¹ represents a hydrogen atom, a methyl group, a hydroxyl group, a carboxyl group or an amino group, m represents an integer of 0 to 10 (provided that, when m is 0, Z¹ represents a hydrogen atom or a methyl group), and an asterisk * indicates a bond to an adjacent constitutional unit.
2. The hydrophilic composition according to 1, wherein the blocked isocyanate silane compound (B) is represented by formula (3) below, 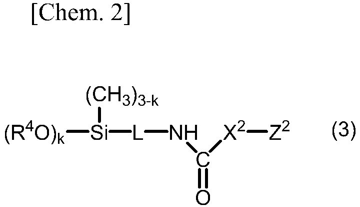 wherein each R⁴ independently represents an alkyl group having 1 to 8 carbon atoms, L represents a divalent linking group, X² represents -O- or -NR⁵-, Z² represents a hydrogen atom or a monovalent organic group, R⁵ represents a hydrogen atom, an alkyl group having 1 to 8 carbon atoms, or a group capable of forming a ring structure by bonding to Z², and k represents an integer of 1 to 3.
3. The hydrophilic composition according to 2, wherein the blocked isocyanate silane compound (B) is represented by formula (4) or (5) below, 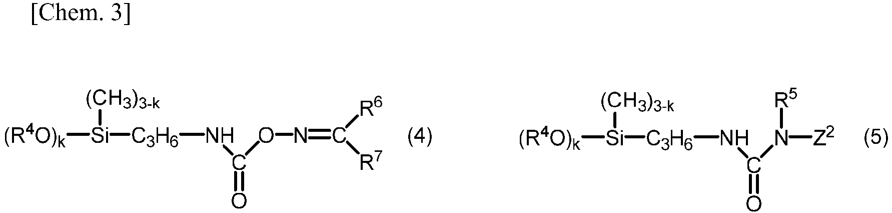 wherein R⁴, R⁵, Z² and k have the same meanings as described above, R⁶ and R⁷ each independently represent a hydrogen atom or a monovalent organic group, and R⁶ and R⁷, or R⁵ and Z², may be linked to each other to form a ring structure.
4. The hydrophilic composition according to any one of 1 to 3, further including at least one compound selected from the group consisting of a polyisocyanate compound, an organosilicon compound represented by formula (6) below, and an organosilicon compound represented by formula (7) below, 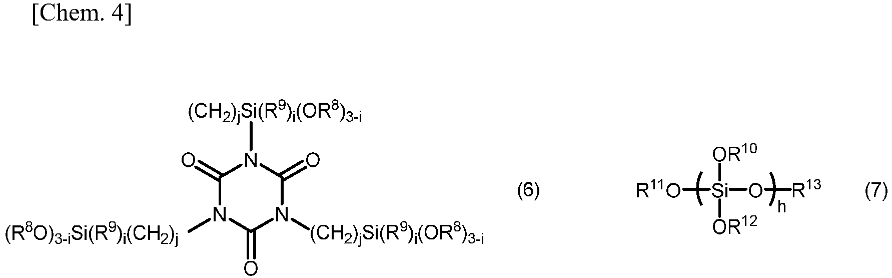 wherein, in formula (6), R⁸ and R⁹ each independently represent an alkyl group having 1 to 10 carbon atoms or an aryl group having 6 to 10 carbon atoms, j represents an integer of 1 to 10, and i represents an integer of 1 to 3; and
   in formula (7), R¹⁰, R¹¹, R¹² and R¹³ each independently represent a hydrogen atom or an organic group having 1 to 6 carbon atoms, and h represents an integer of 1 to 20.
5. A coating agent including the hydrophilic composition according to any one of 1 to 4.
6. A hydrophilic film obtained by curing the coating agent according to 5.
7. A coated article including a substrate and the hydrophilic film according to 6, the hydrophilic film being disposed on at least one surface of the substrate directly or with one or more other layers interposed therebetween.

### ADVANTAGEOUS EFFECTS OF INVENTION

The hydrophilic composition according to the present invention has excellent water resistance and provides a coating film capable of imparting sustained hydrophilicity and fog resistance to substrates formed of glass or the like.

### DESCRIPTION OF EMBODIMENTS

Hereinafter, the present invention will be described in detail.

### (A) Hydrophilic Copolymer

A hydrophilic copolymer used in the present invention (hereinafter also referred to simply as a "copolymer" or a "component (A)") contains constitutional units (a) and (b) described below in specific content ratios.

### [1] Constitutional Unit (a)

The constitutional unit (a) is represented by formula (1) below. 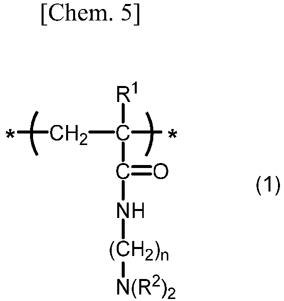 (where the asterisk * has the same meaning as described above.)

In formula (1), R¹ represents a hydrogen atom or a methyl group, preferably a hydrogen atom.

Each R² independently represents an alkyl group having 1 to 6 carbon atoms.

The alkyl group having 1 to 6 carbon atoms represented by R² may be linear, branched or cyclic. Specific examples thereof include a methyl group, an ethyl group, an n-propyl group, an isopropyl group, an n-butyl group, an isobutyl group, a sec-butyl group, a tert-butyl group, an n-pentyl group, an n-hexyl group and a cyclohexyl group.

Among these, from the viewpoint of improving hydrophilicity of the coating film, R² is preferably an alkyl group having 1 to 3 carbon atoms, more preferably a methyl group or an ethyl group, further preferably a methyl group.

n is an integer of 1 to 6. n is preferably 2 or 3.

Specific examples of the constitutional unit (a) represented by formula (1) above include those represented by the following formulae, but are not limited thereto. 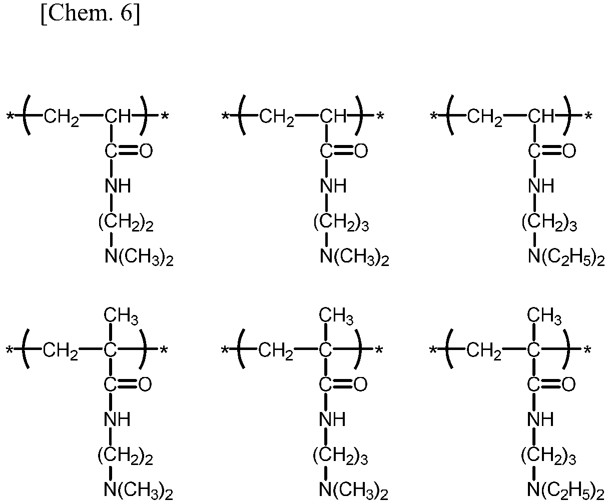 (where the asterisk * has the same meaning as described above.)

### [2] Constitutional Unit (b)

The constitutional unit (b) is represented by formula (2) below. 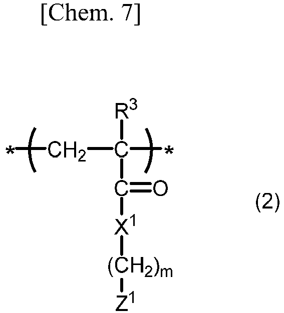 (where the asterisk * has the same meaning as described above.)

In formula (2) above, R³ represents a hydrogen atom or a methyl group, preferably a methyl group.

X¹ represents -NH- or -O-, preferably -O-.

Z¹ represents a hydrogen atom, a methyl group, a hydroxyl group, a carboxyl group or an amino group, preferably a hydrogen atom or a hydroxyl group, provided that, when m is 0, Z¹ represents a hydrogen atom or a methyl group.

m is an integer of 0 to 10, preferably an integer of 0 to 6, more preferably an integer of 1 to 4, still more preferably an integer of 2 to 4.

When the hydrophilic copolymer used in the present invention is used in combination with the (B) blocked isocyanate silane and subjected to a heat treatment, the blocked isocyanate silane and the copolymer can form a crosslinked structure. In addition, for example, when the hydrophilic copolymer is used in combination with a curing catalyst such as an acid catalyst, the copolymer itself can also undergo a crosslinking reaction (self-crosslinking). Therefore, a coating film formed from a composition containing the hydrophilic copolymer according to the present invention and a curing agent has a crosslinked structure and can exhibit excellent water resistance.

From these points, in formula (2) above, it is more preferable that m be an integer of 1 to 4, and Z¹ be a hydroxyl group.

Specific examples of the constitutional unit (b) represented by formula (2) above include those represented by the following formulae, but are not limited thereto. 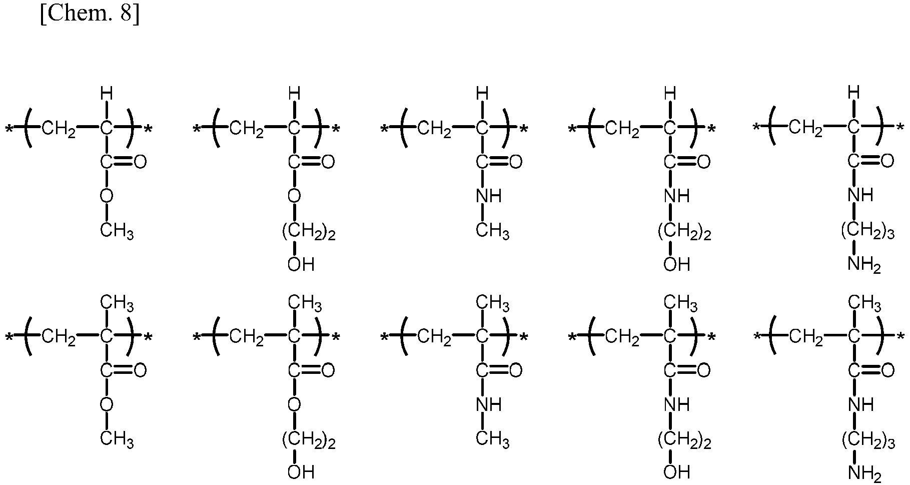 (where the asterisk * has the same meaning as described above.)

In the hydrophilic copolymer used in the present invention, the content of the constitutional unit (a) is preferably 5% to 60% by weight, more preferably 10% to 50% by weight, still more preferably 15% to 40% by weight. If the content of the constitutional unit (a) is less than 5% by weight, hydrophilicity of the copolymer becomes insufficient, which may result in a decrease in the surface hydrophilicity of a coating film obtained therefrom. If the content of the constitutional unit (a) exceeds 60% by weight, hydrophilicity of the copolymer becomes excessively high, which may result in a decrease in the water resistance of a coating film obtained therefrom.

In the hydrophilic copolymer used in the present invention, the total content of the constitutional units (a) and (b) is preferably 30% by weight or more, more preferably 35% by weight or more, still more preferably 40% by weight or more. If the total content of the constitutional units (a) and (b) is less than 30% by weight, the contribution of the hydrophilic factor of the constitutional unit (a) becomes small, which may result in a decrease in the surface hydrophilicity of a coating film obtained therefrom. The upper limit is not particularly limited. The copolymer may be composed only of the constitutional units (a) and (b); however, the total content is preferably 80% by weight or less, more preferably 70% by weight or less, still more preferably 65% by weight or less.

### [3] Other Constitutional Units

The hydrophilic copolymer used in the present invention may contain, in addition to the above constitutional units, for example, a constitutional unit represented by formula (8) below, within a range that does not impair the object of the present invention. 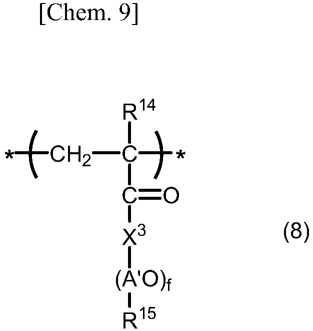 (where the asterisk * has the same meaning as described above.)

In formula (8) above, R¹⁴ represents a hydrogen atom or a methyl group.

X³ represents -NH- or -O-, preferably -O-.

A' represents an alkylene group having 1 to 6 carbon atoms. Specific examples thereof include a methylene group, an ethylene group, a trimethylene group, a tetramethylene group, a pentamethylene group and a hexamethylene group. Among these, an alkylene group having 1 to 3 carbon atoms is preferable, and an ethylene group is more preferable.

R¹⁵ represents an alkyl group having 1 to 6 carbon atoms or a hydrolyzable silyl group. Specific examples of the alkyl group having 1 to 6 carbon atoms include those similar to the groups exemplified by R² above, among which a methyl group is preferable.

Examples of the hydrolyzable silyl group include alkoxysilyl groups such as a trimethoxysilyl group, a triethoxysilyl group, a dimethoxysilyl group, a diethoxysilyl group, a monomethoxysilyl group and a monoethoxysilyl group; carboxylate silyl groups such as an acetoxysilyl group; halosilyl groups such as a trichlorosilyl group, a dichlorosilyl group and a monochlorosilyl group; an aminosilyl group; an oximesilyl group; and a hydrosilyl group.

f is an integer of 1 to 10, preferably an integer of 2 to 8, more preferably an integer of 3 to 6.

In the present invention, when the hydrophilic copolymer contains other constitutional units, the total content thereof is preferably 70% by weight or less, more preferably 60% by weight or less, still more preferably 5% to 50% by weight.

The order of the constitutional units contained in the hydrophilic copolymer is arbitrary; that is, the hydrophilic copolymer may be an alternating copolymer, a random copolymer or a block copolymer.

In the present invention, from the viewpoint of improving affinity with organic solvents and hardness of the coating film, the weight-average molecular weight of the hydrophilic copolymer is preferably 1,000 to 50,000, more preferably 5,000 to 40,000, still more preferably 10,000 to 30,000, further preferably 15,000 to 20,000. The weight-average molecular weight is a value determined by gel permeation chromatography (GPC) (standard substance: polyethylene glycol/polyethylene oxide).

From the viewpoint of compatibility with organic solvents and workability, the viscosity of the hydrophilic copolymer is preferably 0.01 to 0.5 Pa·s (temperature: 25°C). The viscosity is a value measured by a rotational viscometer.

The glass transition temperature of the hydrophilic copolymer is preferably -10°C to 50°C. The glass transition temperature is a value measured in accordance with JIS K 7121.

### [4] Method for Producing Hydrophilic Copolymer

The hydrophilic copolymer used in the present invention can be obtained, for example, as shown in the following scheme, by polymerizing, in the presence of a polymerizable monomer containing a (meth)acrylamide group as represented by formula (9) below and a polymerization initiator containing a (meth)acrylic group and/or a (meth)acrylamide group as represented by formula (10) below, under an inert gas atmosphere such as nitrogen. 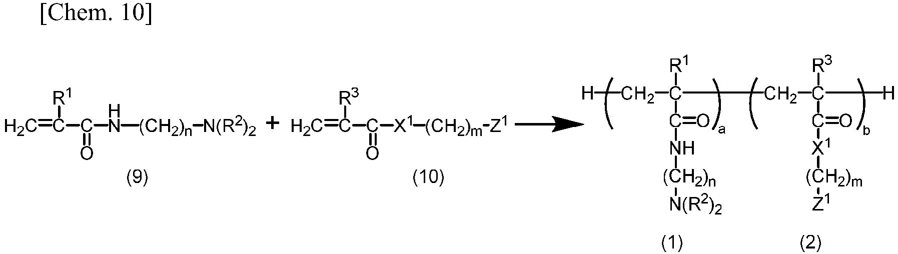 (where R¹, R², R³, X¹, Z¹, m and n are the same as described above.)

The polymerizable monomer containing a (meth)acrylamide group represented by formula (9) above may be a commercially available product. Examples thereof include DMAPAA (registered trademark) manufactured by KJ Chemicals Corporation.

The polymerization initiator is preferably a thermal polymerization initiator. The amount of the polymerization initiator added is preferably 0.5% to 30% by weight, more preferably 1% to 20% by weight, and even more preferably 2% to 10% by weight, relative to the total weight of the monomers to be copolymerized. The polymerization initiator may be added in a batch or may be added in several portions.

The above reaction may be performed without a solvent; however, as necessary, the reaction may be performed in an organic solvent such as methyl ethyl ketone or 1,2-dimethoxyethane, within a range that does not inhibit the reaction.

The reaction temperature is preferably 0°C to the boiling point of the solvent, more preferably 20°C to 80°C. The reaction time is preferably 1 to 24 hours, more preferably 5 to 10 hours.

The hydrophilic copolymer obtained by the above method may be compounded with additives after, as necessary, adjusting the solid content, exchanging the solvent, or performing filtration treatment. Alternatively, the hydrophilic copolymer obtained by polymerization may be purified, for example, by precipitation or reprecipitation using hexane or the like, and then dissolved in a solvent appropriate for the intended use together with additives.

### (B) Blocked Isocyanate Silane Compound

The blocked isocyanate silane compound of the component (B) is a component that functions as a curing agent for the hydrophilic copolymer, and in the present invention, is preferably an organosilicon compound represented by formula (3) below.

In addition to the blocked isocyanate silane itself, structures in which a hydrolyzable silyl group portion is partially hydrolyzed, and partially hydrolyzed condensates that have further undergone intermolecular condensation to form oligomers, also exhibit similar performance and therefore can be used as the curing agent component of the present invention.

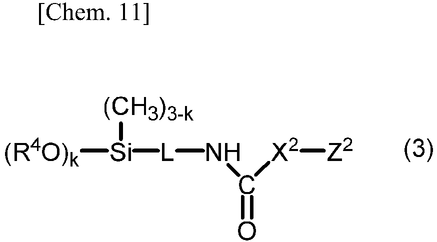

In formula (3), each R⁴ independently represents an alkyl group having 1 to 8 carbon atoms; L represents a divalent linking group; X² represents -O- or -NR⁵-; Z² represents a hydrogen atom or a monovalent organic group; R⁵ represents a hydrogen atom, an alkyl group having 1 to 8 carbon atoms, or a group capable of forming a ring structure by bonding to Z²; and k represents an integer of 1 to 3.

The alkyl group having 1 to 8 carbon atoms represented by R⁵ may be linear, branched or cyclic. Specific examples thereof include a methyl group, an ethyl group, an n-propyl group, an isopropyl group, an n-butyl group, an isobutyl group, a tert-butyl group, an n-pentyl group, a neopentyl group, an n-hexyl group, a cyclohexyl group, an n-heptyl group and an n-octyl group. Among these, a methyl group and an ethyl group are preferable.

Specific examples of the divalent linking group L include an alkylene group, -O-, -S-, -NR-, CO-, -COO-, -NRCO-, -SO₂-, and groups composed of combinations thereof, where R represents a hydrogen atom or an alkyl group having 1 to 4 carbon atoms, preferably a hydrogen atom. Examples of the alkyl group include, among the alkyl groups exemplified above, those having 1 to 4 carbon atoms.

Among these, from the viewpoint of availability of raw materials used for producing the organosilicon compound, as the divalent linking group, an alkylene group represented by -(CH₂)ₚ- (p is an integer of 1 to 10, preferably 1 to 6, more preferably 1 to 4), or a group in which one or more methylene units of the -(CH₂)ₚ- group are substituted with -O-, -S-, -NH-, -CO- or -COO- is preferable, and -(CH₂)₃-(a trimethylene group) is more preferable.

X² is -O- or -NR⁵-. Since X² is a group forming a part of a protecting group of the blocked isocyanate silane compound and is eliminated by heating, it is not particularly limited.

In -NR⁵- of X², R⁵ represents a hydrogen atom, an alkyl group having 1 to 8 carbon atoms, or a group capable of forming a ring structure by bonding to Z².

Examples of the alkyl group having 1 to 8 carbon atoms represented by R⁵ include groups similar to those exemplified by R⁴ above. Among these, a linear or branched alkyl group having 1 to 5 carbon atoms is preferable, and a methyl group or an ethyl group is more preferable.

In -NR⁵-, when R⁵ represents a group capable of forming a ring structure by bonding to Z², -NR⁵- forms a nitrogen-containing heterocyclic structure together with Z² in formula (1). Such a heterocyclic structure preferably contains two or more nitrogen atoms, more preferably two nitrogen atoms. The heterocyclic structure is preferably a five-membered ring structure or a six-membered ring structure, more preferably a five-membered ring structure. As such a heterocyclic structure, an imidazole ring, a pyrazole ring, a 1,2,3-triazole ring or a 1,2,4-triazole ring is preferable, and a pyrazole ring is more preferable.

The above ring structures may have substituents such as an alkyl group having 1 to 20 carbon atoms, an aryl group having 6 to 20 carbon atoms, a carboxyl group, a hydroxyl group, an ester group and an oxo group (=O).

Preferred ring structures include the following; however, the ring structures are not limited thereto.

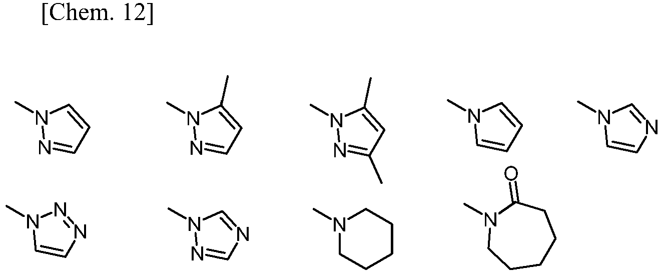

Z² is a hydrogen atom or a monovalent organic group. Since Z² is a group forming a part of a protecting group of the blocked isocyanate silane compound and is eliminated by heating, it is not particularly limited.

Specific examples of the monovalent organic group represented by Z² include a monovalent hydrocarbon group having 1 to 20 carbon atoms and optionally having a substituent, an -OH group (except when X is -O-), and -N=R¹⁷ (where R¹⁷ represents an alkylidene group having 1 to 10 carbon atoms and optionally substituted with an aryl group having 6 to 20 carbon atoms).

The monovalent hydrocarbon group having 1 to 20 carbon atoms may be linear, branched or cyclic, and examples thereof include an alkyl group having 1 to 20 carbon atoms, an aryl group having 6 to 20 carbon atoms, and an aralkyl group having 7 to 20 carbon atoms.

Specific examples of the alkyl group include, in addition to the groups exemplified by R⁴, an n-nonyl group, an n-decyl group, an undecyl group, a dodecyl group, a tridecyl group and an icosyl group.

Specific examples of the aryl group include a phenyl group and a naphthyl group.

Specific examples of the aralkyl group include a benzyl group and a phenylethyl group.

In these groups, at least a part of the hydrogen atoms may be substituted with other substituents. Examples of such other substituents include a carboxyl group, an ester group and a hydroxyl group.

The alkylidene group having 1 to 10 carbon atoms represented by R¹⁷, which may be substituted with an aryl group or a heteroaryl group each having 6 to 20 carbon atoms, may be linear, branched or cyclic. Specific examples thereof include a methylidene group, a phenylmethylidene group, a diphenylmethylidene group, an ethylidene group, a propylidene group, a propan-2-ylidene group, a butylidene group, a butan-2-ylidene group, a pentylidene group, a 4-methylpentan-2-ylidene group, a hexylidene group, a cyclohexylidene group, a heptylidene group, an octylidene group, a nonylidene group and a decylidene group.

Specific examples of the aryl group having 6 to 20 carbon atoms include groups similar to those exemplified by Z² above.

Specific examples of the heteroaryl group having 6 to 20 carbon atoms include a pyrrol-1-yl group, a 1H-pyrrol-2-yl group, an imidazol-1-yl group, an imidazol-2-yl group, a pyrazol-1-yl group, a pyrazol-3-yl group, a pyridin-2-yl group and a pyridin-3-yl group.

In particular, the blocked isocyanate silane compound represented by formula (3) above is preferably one represented by formula (4) or (5) below. 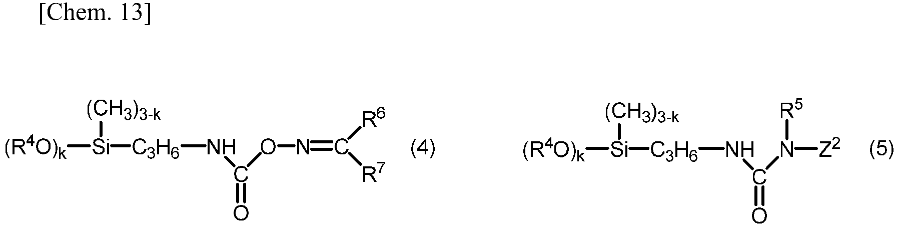 (where R⁴, R⁵, Z² and k have the same meanings as described above.)

Examples of the monovalent organic groups represented by R⁶ and R⁷ include a monovalent hydrocarbon group having 1 to 20 carbon atoms and a heteroaryl group having 6 to 20 carbon atoms.

Specific examples of the monovalent hydrocarbon group having 1 to 20 carbon atoms include groups similar to those exemplified by Z² above. An alkyl group having 1 to 20 carbon atoms and an aryl group having 6 to 20 carbon atoms are preferable. Specific examples thereof also include groups similar to those described above.

Examples of the heteroaryl group having 6 to 20 carbon atoms include groups similar to those exemplified by R⁵ above.

Examples of the ring structure formed by R⁶ and R⁷ being linked to each other include a cyclopentane ring and a cyclohexane ring.

These hydrocarbon groups and heteroaryl groups may have a substituent. Specific examples of the substituent include a carboxyl group, a hydroxyl group and an ester group.

Examples of the group represented by R⁶-methylidene-R⁷ include the alkylidene groups exemplified by R¹⁷ above. Among these, a diphenylmethylidene group, a propan-2-ylidene group, a butan-2-ylidene group, a 4-methylpentan-2-ylidene group and a cyclohexylidene group are preferable.

Specific examples of R⁵ and Z² are the same as those described above. Among these, it is preferable that R⁵ and Z² be bonded to each other to form a ring structure together with a nitrogen atom. The ring structure is preferably a five-membered ring or a six-membered ring, more preferably a five-membered ring.

The ring structure preferably has two nitrogen atoms. An imidazole ring, a pyrazole ring, a 1,2,3-triazole ring and a 1,2,4-triazole ring are more preferable. A pyrazole ring is still more preferable.

The ring structure may have substituents such as an alkyl group having 1 to 20 carbon atoms, an aryl group having 6 to 20 carbon atoms, a carboxyl group, a hydroxyl group, an ester group and an oxo group (=O).

Preferred ring structures include the following; however, the ring structures are not limited thereto.

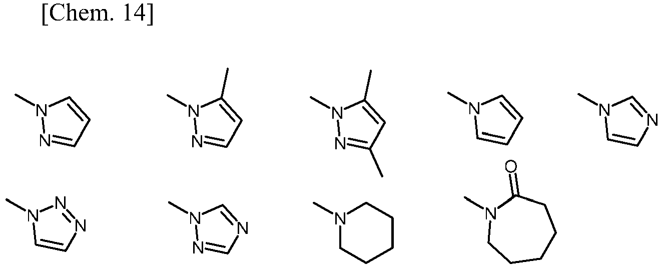

Preferred specific examples of the blocked isocyanate silane compound of the component (B) include the following compounds, but the blocked isocyanate silane compound of the component (B) is not limited thereto.

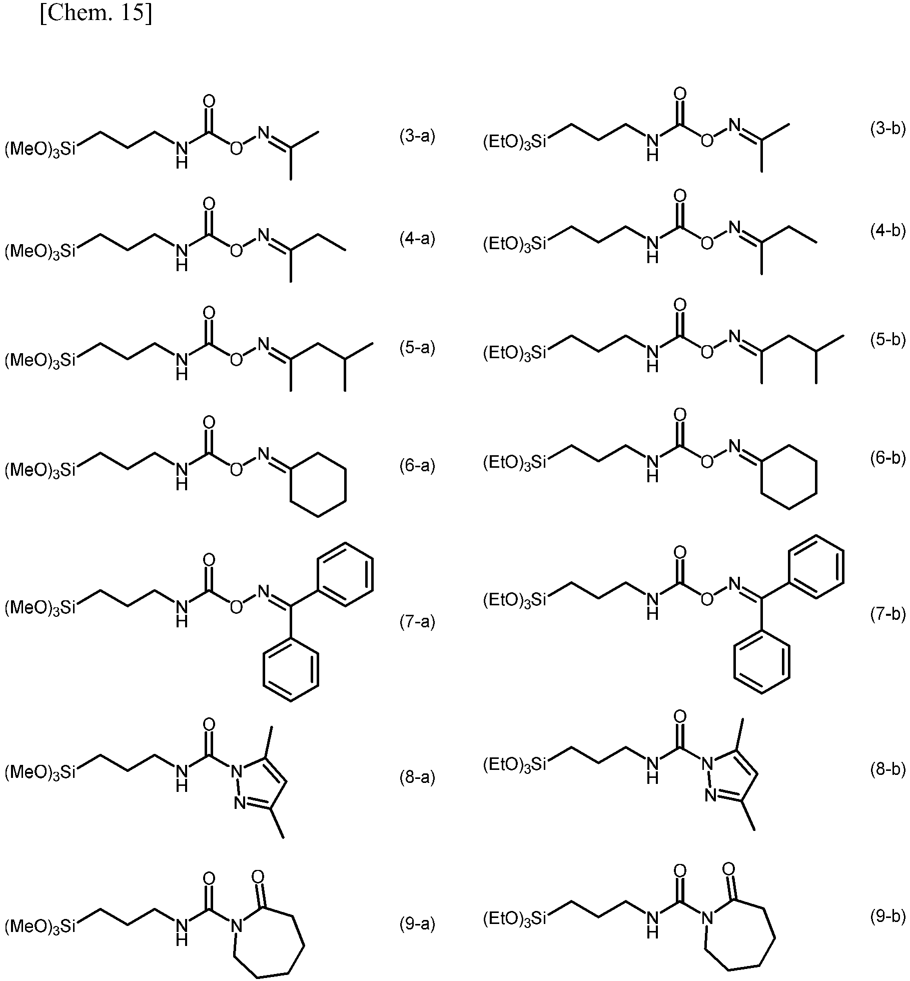

The hydrophilic composition according to the present invention (hereinafter also referred to simply as "composition") contains the components (A) and (B) described above. Specifically, 0.001 to 10 parts by weight of the component (B) is contained relative to 100 parts by weight of the component (A).

If the content of the component (B) is less than the lower limit, the desired effect of improving water resistance is not exhibited, whereas if the content exceeds the upper limit, the effect becomes saturated and cost effectiveness is reduced. In addition, the impact of hydrophobicity originally possessed by the silane coupling agent becomes significant, tending to result in a decrease in hydrophilicity.

The content of the component (A) in the hydrophilic composition according to the present invention is not particularly limited. From the viewpoint of hydrophilicity, the content is preferably 1% to 40% by weight of the entire composition, more preferably 10% to 25% by weight.

The hydrophilic composition according to the present invention may contain other components as necessary within a range that does not impair the object of the present invention, and particularly preferably contains a curing agent.

The curing agent promotes a crosslinking reaction of the hydrophilic copolymer described above and contributes to formation of a crosslinked structure inside the coating film. The curing agent may or may not be incorporated into the crosslinked structure.

In the case of a curing agent incorporated into the crosslinked structure, it is preferable that the curing agent have a functional group or a structure that undergoes a crosslinking reaction with a functional group contained in a side chain of the hydrophilic copolymer described above (specifically, the functional group Z² contained in the constitutional unit (b), or an alkoxysilyl group of the component (B)). In this case, the mode of crosslinking may be any of covalent bonding, ionic bonding, hydrogen bonding or coordination bonding, but covalent bonding is preferable.

Preferred examples of the curing agent incorporated into the crosslinked structure include those having, in the molecule, a functional group such as a hydrolyzable silyl group, an isocyanato group, an epoxy group, a carbodiimide group, an oxazolyl group, an epoxy group, a hydroxyl group, a carboxyl group or an amino group; a molecular structure such as a siloxane structure or a melamine structure; or a metal ion.

Preferred combinations of a functional group in a side chain of the hydrophilic copolymer capable of undergoing a crosslinking reaction and a functional group or a structure of the curing agent are, for example, as shown in Table 1.

**[Table 1]**

| Functional group in side chain of hydrophilic copolymer | Functional group or structure of curing agent |
|---|---|
| Hydrolyzable silyl group | Hydrolyzable silyl group; siloxane structure |
| Hydroxyl group | Isocyanato group; melamine structure |
| Carboxyl group | Epoxy group; carbodiimide group; oxazoline group; metal ion |
| Amino group | Epoxy group |
| Isocyanato group | Hydroxyl group |
| Epoxy group | Carboxyl group; amino group |

Examples of the curing agent having a hydrolyzable silyl group include compounds having a hydrolyzable silyl group or a siloxane structure containing a hydrolyzable silyl group. Specific examples thereof include a compound represented by formula (6) below, a compound represented by formula (7) below, and a hydrolytic condensation product of a compound represented by formula (7) below.

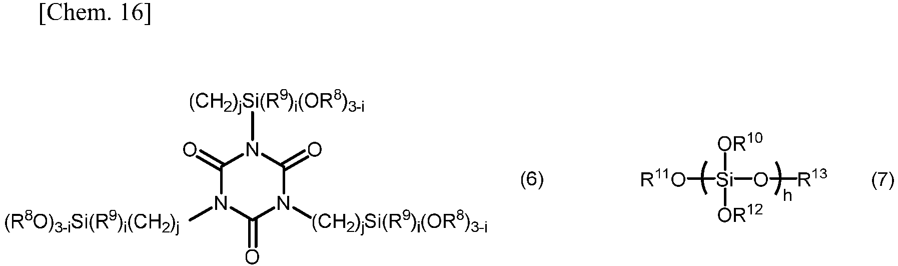

In formula (6) above, R⁸ and R⁹ each independently represent an alkyl group having 1 to 10 carbon atoms, preferably 1 to 8 carbon atoms, more preferably 1 to 6 carbon atoms, or an aryl group having 6 to 10 carbon atoms, preferably 6 to 8 carbon atoms.

The alkyl groups represented by R⁸ and R⁹ may be linear, branched or cyclic. Specific examples thereof include a methyl group, an ethyl group, an n-propyl group, an isopropyl group, an n-butyl group, an isobutyl group, an s-butyl group, a t-butyl group, an n-pentyl group, an n-hexyl group and a cyclohexyl group.

Specific examples of the aryl groups represented by R⁸ and R⁹ include a phenyl group and a tolyl group.

Among these, R⁸ is preferably an alkyl group having 1 to 3 carbon atoms, more preferably a methyl group or an ethyl group, and R⁹ is preferably an alkyl group having 1 to 3 carbon atoms, more preferably a methyl group.

In formula (6) above, j is an integer of 1 to 10, preferably an integer of 1 to 6, more preferably an integer of 1 to 4, further preferably an integer of 2 to 4.

i is an integer of 1 to 3, preferably 3.

Specific examples of the compound represented by formula (6) above include N,N,N-tris(trimethoxysilylpropyl)isocyanurate and N,N,N-tris(triethoxysilylpropyl)isocyanurate, but the compound is not limited thereto.

In formula (7) above, R¹⁰, R¹¹, R¹² and R¹³ each independently represent a hydrogen atom or a monovalent organic group having 1 to 6 carbon atoms.

In formula (7), the monovalent organic groups having 1 to 6 carbon atoms represented by R¹⁰, R¹¹, R¹² and R¹³ may be linear, branched or cyclic. Examples thereof include an alkyl group having 1 to 6 carbon atoms and an alkenyl group having 2 to 6 carbon atoms.

Specific examples of the alkyl group having 1 to 6 carbon atoms include a methyl group, an ethyl group, a propyl group, an isopropyl group, an n-butyl group, a tert-butyl group, an n-pentyl group, an n-hexyl group and a cyclohexyl group.

Specific examples of the alkenyl group having 2 to 6 carbon atoms include a vinyl group and an allyl group.

Among these, from the viewpoint of hydrolyzability, the monovalent organic groups having 1 to 6 carbon atoms represented by R¹⁰, R¹¹, R¹² and R¹³ are preferably alkyl groups having 1 to 4 carbon atoms, more preferably a methyl group or an ethyl group.

In formula (7), h represents an integer of 1 to 20, preferably an integer of 3 to 12, more preferably an integer of 5 to 12. When h is 20 or less, the viscosity of the coating liquid does not become excessively high, and a fog-resistant film having high uniformity can be formed. When h is 1 or more, the reactivity of the compound represented by formula (5) can be readily controlled, and a fog-resistant film having excellent hydrophilicity can be formed.

In the present invention, the "condensation product of the compound represented by formula (7)" means a compound having a structure in which a siloxane bond (Si-O-Si) is formed at at least one of Si-OR¹⁰, Si-OR¹¹, Si-OR¹² and Si-OR¹³ in the compound represented by formula (7). The condensation product of the compound represented by formula (7) can be formed, for example, by two or more molecules of the compound represented by formula (7) undergoing condensation or hydrolytic condensation with one another. Hydrolytic condensation will be described below by taking, as an example, a case where R¹⁰, R¹¹, R¹² and R¹³ in formula (7) are methyl groups (-CH₃). In one example of hydrolytic condensation, Si-OH is formed by hydrolysis of Si-OCH₃, and subsequently Si-O-Si is formed by dehydration condensation of Si-OH.

The structure of the hydrolytic condensation product of the compound represented by formula (7) is not particularly limited, and examples thereof include a random type, a linear type, a ladder type and a cage type.

In the compound represented by formula (7) and the hydrolytic condensation product thereof, when hydrogen atoms are included among R¹⁰, R¹¹, R¹² and R¹³, the hydrogen atoms may be either those contained in a compound added as a raw material during the production of the compound represented by formula (7), or those introduced by hydrolysis. That is, when at least one of R¹⁰, R¹¹, R¹² and R¹³ in formula (7) is a hydrogen atom, at least one of the Si-OH groups in formula (7) may be either an Si-OH group contained in a compound added as a raw material during the production of the compound represented by formula (7), or an Si-OH group formed by hydrolysis.

The compound represented by formula (7) may be a commercial product. The compound represented by formula (7) is available, for example, as MKC (registered trademark) Silicate (e.g., MS51 or MS56) manufactured by Mitsubishi Chemical Corporation.

The weight-average molecular weight (Mw) of the compound represented by formula (7) is preferably 300 to 1,500, more preferably 500 to 1,200. The weight-average molecular weight is a value determined by gel permeation chromatography (GPC) (standard substance: polyethylene glycol/polyethylene oxide).

Examples of the curing agent having an isocyanato group include aliphatic, alicyclic and aromatic polyisocyanates.

Specific examples thereof include isophorone diisocyanate, hexamethylene diisocyanate, xylylene diisocyanate, tolylene diisocyanate, polymeric MDI, naphthalene diisocyanate, tetramethyl xylylene diisocyanate, trimethyl hexamethylene diisocyanate, lysine diisocyanate methyl ester, hydrogenated xylylene diisocyanate, diphenylmethane diisocyanate, methylenebis(4,1-cyclohexylene) diisocyanate, 1,3-bis(isocyanatomethyl)cyclohexane, adducts of diisocyanate compounds with polyol compounds such as trimethylolpropane, and isocyanate derivatives such as biuret forms and isocyanurate forms of diisocyanate compounds.

Among these, from the viewpoint of suppressing yellowing of the coating film, polyisocyanates derived from hexamethylene diisocyanate are preferable.

The curing agent having an isocyanato group is available as a commercial product; examples thereof include DURANATE (registered trademark) TPA-100, TKA-100, 24A-100, 22A-75P and P301-75E manufactured by Asahi Kasei Corporation; Coronate (registered trademark) HX, HK and 2715 manufactured by Tosoh Corporation; and Takenate (registered trademark) 500 and 600 manufactured by Mitsui Chemicals, Inc.

These may be used alone or in combination of two or more kinds.

The curing agent having a melamine structure is preferably a melamine resin. Specific examples thereof include condensation products of melamine compounds such as guanamine, melamine, N-butylmelamine, N-phenylmelamine, N,N-diphenylmelamine, N,N-diallylmelamine, N,N',N"-triphenylmelamine, N,N',N"-trimethylolmelamine, benzoguanamine, 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine and ammeline (N,N,N',N'-tetracyanoethylbenzoguanamine) with formaldehyde and alcohols (e.g., methanol).

The curing agent having a melamine structure is available as a commercial product; for example, U-VAN (registered trademark) 20SE and 225 manufactured by Mitsui Chemicals, Inc.; and AMIDIR (registered trademark) L-117-60, L-109-65, 47-508-60, L-118-60, G821-60 and J820-60 manufactured by DIC Corporation can be used.

These may be used alone or in combination of two or more kinds.

Examples of the curing agent having an epoxy group include aliphatic, alicyclic and aromatic diepoxy and triepoxy compounds.

Specific examples thereof include 2,2-bis(4-hydroxyphenyl)propane diglycidyl ether (bisphenol A diglycidyl ether), ethylene glycol diglycidyl ether, triglycidyl isocyanurate, bisphenol A-type epoxy resins, bisphenol F-type epoxy resins, naphthalene-type epoxy resins, biphenyl-type epoxy resins, phenol novolac resin-type epoxy resins, 1,5-hexadiene diepoxide, 1,4-pentadiene diepoxide, 1,2:6,7-diepoxyheptane, 1,2:8,9-diepoxynonane, 2,2'-(1,6-hexanediyl)bisoxirane, 1,2:7,8-diepoxyoctane, 1,5-diepoxycyclohexane, 1,2:3,4-diepoxycyclohexane, 1,2:5,6-diepoxycyclooctane, limonene dioxide, cis-1,2:4,5-diepoxy-p-menthane, 1,6-diepoxynaphthalene and triepoxydecane.

These may be used alone or in combination of two or more kinds.

Examples of the curing agent having an amino group include aliphatic, alicyclic and aromatic diamines, triamines, and tetraamines each containing a primary amine or a secondary amine.

Specific examples thereof include hexamethylenediamine, heptamethylenediamine, octamethylenediamine, nonamethylenediamine, 2-methyl-1,5-diaminopentane, 3,3-dimethylbutane-1,2-diamine, 4-methylpentane-1,2-diamine, 2,2,4,4-tetramethylcyclobutane, 2-methylcyclohexane-1,3-diamine, 2,4-diaminotoluene, 2,5-diaminotoluene, 2,6-diaminotoluene, 3,4-diaminotoluene, 2,3-diaminotoluene, 2,5-dimethylbenzene-1,2-diamine, 3,4-dimethylbenzene-1,2-diamine, 2,6-dimethylbenzene-1,4-diamine, 2,4-dimethylbenzene-1,3-diamine, 3,5-dimethyl-1,2-benzenediamine, 4-ethylbenzene-1,3-diamine, 2,5-dimethylbenzene-1,4-diamine, 4-methoxybenzene-1,3-diamine, 4-(1,1-dimethylethyl)-1,2-benzenediamine, para-phenylenediamine, ortho-phenylenediamine, N-isopropyl-1,3-propanediamine, N-hexylethylenediamine, 5-isopropylaminoamylamine, n-butylethylenediamine, N-tert-butylbutane-1,4-diamine, N-ethylhexane-1,6-diamine, n-isobutylethane-1,2-diamine, N-cyclohexyl-1,2-ethanediamine, N-1-methylcyclohexane-1,4-diamine, N-methylbenzene-1,2-diamine, N-phenylethylenediamine, n-ethylbenzene-1,2-diamine, N-1-methylbenzene-1,3-diamine, 4-amino-N-methylaniline, 2-aminodiphenylamine, 4-aminodiphenylamine, N-1,4-dimethylbenzene-1,2-diamine, N-1,5-dimethylbenzene-1,2-diamine, N-isopropyl-benzene-1,2-diamine, N-(3-aminophenyl)-N-phenylamine, N,N'-dimethyltrimethylenediamine, N,N'-diethylbutylenediamine, N,N'-diisopropyl-2,3-butane-diamine, N,N'-diethyl-2-butene-1,4-diamine, N,N'-diisopropylethylenediamine, N-propyl-N'-isopropylethylenediamine, N,N'-dimethylbutane-1,4-diamine, N,N'-diethyl-1,3-propanediamine, N,N'-diethylethylenediamine, (1R,2R)-1-N,2-N-dimethylcyclohexane-1,2-diamine, N,N'-dimethyl-1,2-cyclohexanediamine, 1-N,4-N-dimethylcyclohexane-1,4-diamine, 1,4-benzenediamine, 1,2,4-triaminobenzene, 2,4,5-triaminotoluene, 2,4,6-triaminotoluene, 2,3,4-triaminotoluene, 3,5,6-triaminotoluene, 3-N-methylbenzene-1,2,3-triamine, 2-N-methylbenzene-1,2,3-triamine, 4-N-methylbenzene-1,2,4-triamine, 1-N-methylbenzene-1,2,4-triamine, 3-N-methylbenzene-1,3,5-triamine, 1-N',1-N"-diethylpropane-1,1,1-triamine, 4-(3,4-diaminophenyl)benzene-1,2-diamine, 1-N,1-N,2-N,2-N,3-N,3-N,4-N,4-N-octamethylbutane-1,2,3,4-tetraamine and 4-[3-amino-4-(methylamino)phenyl]benzene-1,2-diamine.

These may be used alone or in combination of two or more kinds.

Examples of the curing agent having a carbodiimide group include dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, di-β-naphthylcarbodiimide and N-isopropyl-N'-[2-(methacryloyloxy)ethyl]carbodiimide.

These may be used alone or in combination of two or more kinds.

Examples of the curing agent having an oxazoline group include 2,2'-bis(2-oxazoline), 2,2'-isopropylidenebis(4-phenyl-2-oxazoline), 1,3-bis(4,5-dihydro-2-oxazolyl)benzene and 1,4-bis(4,5-dihydro-2-oxazolyl)benzene.

These may be used alone or in combination of two or more kinds.

Examples of the curing agent having a metal ion include aluminum ethyl acetoacetate diisopropylate as an organoaluminum compound.

Among these, from the viewpoint of ease of handling, a curing agent having an isocyanato group or a melamine structure is preferable. It is more preferable to combine a hydrophilic copolymer containing a constitutional unit (b) in which Z¹ is a hydroxyl group with a curing agent having an isocyanato group or a melamine structure. It is further preferable to combine a hydrophilic copolymer containing a constitutional unit (b) in which Z¹ is a hydroxyl group with a polyisocyanate or a melamine resin.

That is, one preferred embodiment of the present invention is a hydrophilic composition containing the hydrophilic copolymer described above and, as a curing agent, a polyisocyanate or a melamine resin. Among these, it is particularly preferable that a hydrophilic copolymer containing a constitutional unit (b) in which Z¹ is a hydroxyl group be combined with a curing agent having an isocyanato group (a polyisocyanate) because, in such a case, a crosslinking reaction occurs even under low-temperature conditions (e.g., 110°C or less), thereby enabling formation of a coating film even on a substrate having low heat resistance by the composition according to the present invention.

On the other hand, examples of curing agents that are not incorporated into a crosslinked structure (curing catalysts) include inorganic acids, organic acids, organometallic salts and Lewis acids.

Examples of the inorganic acids include hydrochloric acid, sulfuric acid, nitric acid, phosphoric acid, nitrous acid, perchloric acid and sulfamic acid.

Examples of the organic acids include formic acid, acetic acid, propionic acid, butyric acid, oxalic acid, succinic acid, maleic acid, lactic acid, p-toluenesulfonic acid and citric acid.

Examples of the organometallic salts include lithium hydroxide, sodium hydroxide, potassium hydroxide, n-hexylamine, dimethylamine, tributylamine, diazabicycloundecene, ethanolamine acetate, dimethylaniline formate, tetraethylammonium benzoate, sodium acetate, potassium acetate, sodium propionate, potassium propionate, sodium formate, potassium formate, benzoyltrimethylammonium acetate, tetramethylammonium acetate and tin octoate.

Examples of the Lewis acids include tetraisopropyl titanate, tetrabutyl titanate, aluminum triisobutoxide, aluminum triisopropoxide, aluminum acetylacetonate, tin chloride (SnCl₄), titanium chloride (TiCl₄) and zinc chloride (ZnCl₄).

In addition, alkyl tin ester compounds such as dibutyltin diacetate, dibutyltin dilaurate, dioctyltin dilaurate, dibutyltin dioctoate, dioctyltin dioctoate and dioctyltin diversatate can also be suitably used.

These may be used alone or in combination of two or more kinds.

A curing agent incorporated into a crosslinked structure and a curing agent that is not incorporated into a crosslinked structure (curing catalyst) may be appropriately used in combination.

When the hydrophilic composition according to the present invention contains a curing agent, the content thereof is preferably 0.05 to 50 parts by weight and more preferably 0.1 to 10 parts by weight, relative to 100 parts by weight of the hydrophilic copolymer.

The hydrophilic composition according to the present invention preferably further contains a hydrophilic organosilicon compound represented by formula (10) below and/or a hydrolytic condensation product thereof.

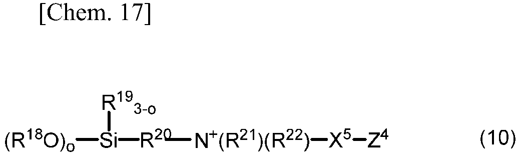

In formula (10), R¹⁸ and R¹⁹ each independently represent an alkyl group having 1 to 10 carbon atoms, preferably 1 to 8 carbon atoms, more preferably 1 to 6 carbon atoms, or an aryl group having 6 to 10 carbon atoms, preferably 6 to 8 carbon atoms. Specific examples of these alkyl groups and aryl groups include those similar to the groups exemplified by R⁶. Among these, a methyl group is preferable.

R²⁰ represents a divalent organic group containing an aromatic ring and having 6 to 14 carbon atoms, preferably 6 to 10 carbon atoms. A divalent organic group containing an aromatic hydrocarbon ring is preferable. A divalent organic group containing a benzene ring or a naphthalene ring is more preferable. An arylene or aralkylene group containing a benzene or naphthalene ring is further preferable.

Specific examples of the arylene group represented by R²⁰ include a 1,2-phenylene group, a 1,3-phenylene group, a 1,4-phenylene group and a naphthylene group.

Specific examples of the aralkylene group represented by R²⁰ include a methylenephenylene group, an ethylenephenylene group, a methylenephenylenemethylene group and an ethylenephenyleneethylene group.

Among these, R¹⁸ is preferably a phenylene group and more preferably a 1,4-phenylene group.

R²¹ and R²² each independently represent an alkyl group having 1 to 6 carbon atoms. Specific examples thereof include groups similar to those, among the groups exemplified by R⁶, having 1 to 6 carbon atoms. Among these, a methyl group is preferable.

X⁵ represents an alkylene group having 1 to 10 carbon atoms, preferably 1 to 8 carbon atoms, more preferably 1 to 6 carbon atoms.

The alkylene group represented by X⁵ may be linear, branched or cyclic. Specific examples thereof include a methylene group, an ethylene group, a trimethylene group, a propylene group, a tetramethylene group, a pentamethylene group, a hexamethylene group and a cyclohexylene group.

Among these, X⁵ is preferably a methylene group, an ethylene group or a trimethylene group, more preferably a trimethylene group.

Z⁴ represents COO⁻, SO₃⁻ or PO₄⁻. From the viewpoint of durability of the resulting coating film, SO₃⁻ is preferable.

o is an integer of 1 to 3, preferably 3.

Specific examples of such hydrophilic organosilicon compounds are shown below; however, the compounds are not limited thereto. Among these, a compound represented by formula (11) is preferable. 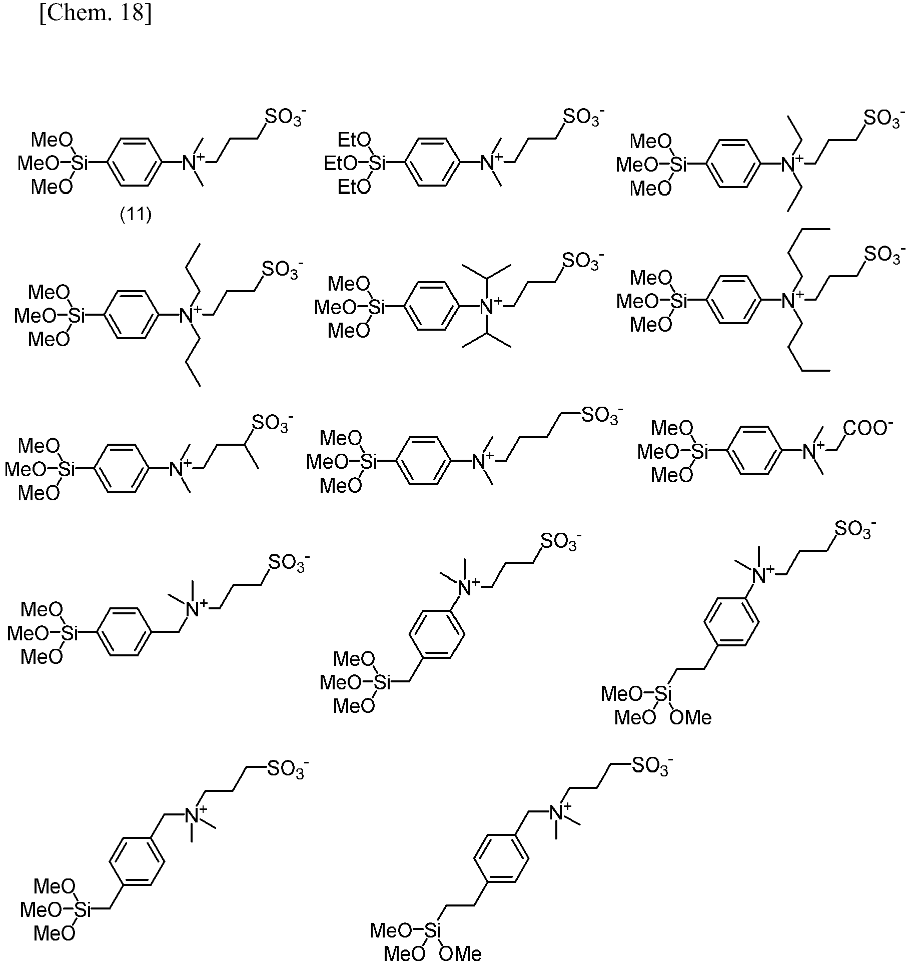 (where Me represents a methyl group, and Et represents an ethyl group.)

In the hydrophilic composition according to the present invention, the content of the hydrophilic organosilicon compound is preferably 0.01 to 10 parts by weight and more preferably 0.1 to 1 part by weight, relative to 100 parts by weight of the hydrophilic copolymer.

The hydrophilic composition according to the present invention may further contain a solvent, as necessary. The solvent is not particularly limited, and may be any solvent that is capable of dissolving or dispersing the hydrophilic copolymer and, optionally, the curing agent, the hydrophilic organosilicon compound, and other additives, that does not react with the components, and that can be readily removed in a drying step described later.

Specific examples of the solvent include methanol, ethanol, isopropanol, tetrahydrofuran, cyclohexanone, methyl ethyl ketone, ethylene glycol monomethyl ether, ethylene glycol monoethyl ether, 2-methoxyethyl acetate, diethylene glycol dimethyl ether, 1-methoxy-2-propanol, 1-methoxy-2-propyl acetate, N,N-dimethylformamide, N,N-dimethylacetamide, toluene, ethyl acetate, ethyl lactate, methyl lactate, dimethyl sulfoxide and water.

For example, when a polyisocyanate is used as the curing agent, it is preferable to use a solvent unreactive with an isocyanato group (e.g., a ketone-based solvent such as methyl ethyl ketone or methyl isobutyl ketone).

These may be used alone or in combination of two or more kinds.

The hydrophilic composition according to the present invention may further contain, as necessary, additives such as pigments, film-forming aids, fillers, toners, wetting agents, antistatic agents, pigment dispersants, plasticizers, antioxidants, flow control agents, viscosity modifiers, defoaming agents, ultraviolet absorbers and dispersants.

From the viewpoint of coatability and workability, the solid content of the composition is preferably 5% to 80% by weight, more preferably 10% to 30% by weight.

From the viewpoint of coatability and workability, the viscosity of the composition is preferably 0.01 to 0.05 Pa·s (at a temperature of 25°C).

The composition according to the present invention may be either of a one-component type or of a type in which two or more components are mixed before use.

The composition according to the present invention can impart hydrophilicity to various substrates by being applied thereto.

Specific examples of materials constituting the above substrates include glass; synthetic resins {e.g., polymethyl methacrylate resins, polyethylene terephthalate resins, polybutylene terephthalate resins, polyethylene naphthalate resins, ABS resins, polycarbonate resins, polystyrene resins, epoxy resins, unsaturated polyester resins, melamine resins, diallyl phthalate resins, polyimide resins, urethane resins, nylon resins, polyethylene resins, polypropylene resins, polyvinyl chloride resins, fluororesins (e.g., polytetrafluoroethylene resins, polychlorotrifluoroethylene resins, polyvinylidene fluoride resins, perfluoroalkoxy fluororesins, tetrafluoroethylene-hexafluoropropylene copolymer resins, ethylene-tetrafluoroethylene copolymer resins and ethylene-chlorotrifluoroethylene copolymer resins), polybutadiene, polyisopropylene, SBR, nitrile rubber, EPM, EPDM, epichlorohydrin rubber, neoprene rubber, polysulfide and butyl rubber}; metals (e.g., iron, aluminum, stainless steel, titanium, copper, brass, and alloys thereof); cellulose, cellulose derivatives, cellulose analogs (e.g., chitin, chitosan and porphyran), natural fibers such as cotton, silk and wool, regenerated fibers such as rayon, semi-synthetic fibers such as acetate, synthetic fibers such as vinylon fibers, polyester fibers, nylon fibers, polyethylene fibers, polypropylene fibers, polyurethane fibers and polyaramid fibers; and composite fibers of these fibers (e.g., polyester/cotton). Examples of the forms thereof include substrates, sheets, films, fibers, and various articles using these.

The composition according to the present invention can form a coating film on the surface of a substrate or the like by applying a known coating method, thereby providing a hydrophilic coating film.

Examples of the coating method include a bar coating method, a dip coating method, a spin coating method, a spray coating method, a float coating method, a brush coating method, a gravure coating method, a roll transfer method, a blade coating method, an air knife coating method, a slit coating method, a screen coating method, an inkjet method and a flexographic printing method. Among these, a bar coating method is preferable.

After the composition is applied onto a substrate, a cured coating film can be obtained by heating.

The heating temperature is preferably 40°C to 250°C, more preferably 80°C to 120°C. The drying time is preferably 10 seconds to 12 hours, more preferably 30 seconds to 3 hours.

Optionally, pre-drying may be performed under conditions similar to those described above to remove the solvent in the composition.

The heating atmosphere may be either an air atmosphere or an inert gas (e.g., nitrogen or argon) atmosphere.

The thickness of the coating film (dry film thickness) according to the present invention is not particularly limited, but is preferably 0.1 to 50 µm, more preferably 1 to 10 µm.

### EXAMPLES

Hereinafter, the present invention will be described in further detail with reference to Examples and Comparative Examples; however, the present invention is not limited to these Examples.

### (1) Production of Hydrophilic Copolymer

### [Synthesis Example 1]

Into a reactor, 258.35 g of methyl ethyl ketone, 101.55 g of DMAPAA (registered trademark, manufactured by KJ Chemicals Corporation) represented by formula (12) below, 5.81 g of hydroxyethyl acrylate (manufactured by Tokyo Chemical Industry Co., Ltd.) represented by formula (13) below, and 3.36 g of V-59, an oil-soluble azo polymerization initiator (manufactured by FUJIFILM Wako Pure Chemical Corporation) represented by formula (14) below were charged. The resulting mixture was reacted at 80°C for 4 hours.

After the reaction, 216.00 g of 2-propanol (IPA) was added, and the mixture was subsequently filtered to obtain 360 g of a methyl ethyl ketone-IPA (3:2, wt/wt) solution of a hydrophilic copolymer P1 (content of the constitutional unit (a): 93% by weight, content of the constitutional unit (b): 7% by weight; weight-average molecular weight: 400,000) (solid content: 25% by weight, defined as A-1).

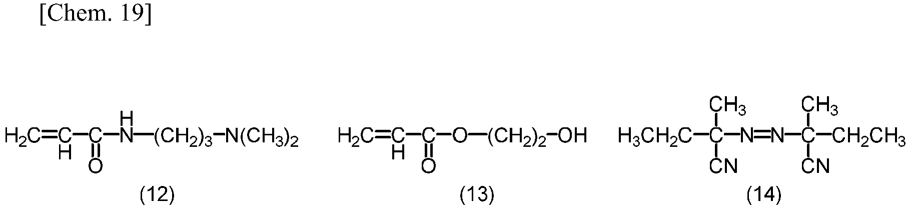

### [Synthesis Example 2]

Into a reactor, 258.23 g of methyl ethyl ketone, 101.55 g of DMAPAA (registered trademark, manufactured by KJ Chemicals Corporation) represented by formula (12) above, 5.76 g of HEAA (registered trademark, manufactured by KJ Chemicals Corporation) represented by formula (15) below, and 3.36 g of V-59, an oil-soluble azo polymerization initiator (manufactured by FUJIFILM Wako Pure Chemical Corporation) represented by formula (14) above were charged. The resulting mixture was reacted at 80°C for 4 hours.

After the reaction, 216.00 g of 2-propanol (IPA) was added, and the mixture was subsequently filtered to obtain 360 g of a methyl ethyl ketone-IPA (3:2, wt/wt) solution of a hydrophilic copolymer P2 (content of the constitutional unit (a): 93% by weight, content of the constitutional unit (b): 7% by weight; weight-average molecular weight: 420,000) (solid content: 25% by weight, defined as A-2).

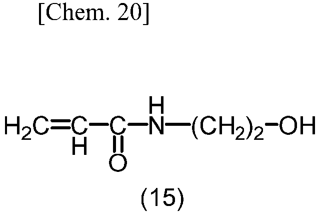

### (2) Preparation of Coating Composition (Hydrophilic Composition)

### [Examples 1 to 12 and Comparative Examples 1 to 10]

A hydrophilic composition was prepared by mixing the following components at the compounding ratios (parts by weight) shown in Tables 2 and 3 below.

**[Table 2]**

| Formulation (parts by weight) | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| (A) | A-1 | 100 | 100 | 100 | 100 | 100 | 100 | 100 | 100 | 100 | 100 | 100 |
| (B) | B-1 | 5 | - | - | 5 | 5 | 5 | - | - | - | - | 50 |
| | B-2 | - | 5 | - | - | - | - | - | - | - | - | - |
| | B-3 | - | - | 5 | - | - | - | - | - | - | - | - |
| | B'-1 | - | - | - | - | - | - | - | 5 | - | - | - |
| | B'-2 | - | - | - | - | - | - | - | - | 5 | - | - |
| Curing agent | C-1 | - | - | - | 5 | - | 5 | - | - | - | - | - |
| | C-2 | - | - | - | - | 5 | - | - | - | - | - | - |
| Hydrophilic silane | D-1 | - | - | - | - | - | 5 | - | - | - | - | - |
| Curing catalyst | NEOSTANN U-830 | 0.9 | 0.9 | 0.9 | 0.9 | 0.9 | 0.9 | 0.9 | 0.9 | 0.9 | 0.9 | 0.9 |

**[Table 3]**

| Formulation (parts by weight) | | Example | | | | | | Comparative Example | | | | |
|---|---|---|---|---|---|---|---|---|---|---|---|---|
| | | 7 | 8 | 9 | 10 | 11 | 12 | 6 | 7 | 8 | 9 | 10 |
| (A) | A-2 | 100 | 100 | 100 | 100 | 100 | 100 | 100 | 100 | 100 | 100 | 100 |
| (B) | B-1 | 5 | - | - | 5 | 5 | 5 | - | - | - | - | 50 |
| | B-2 | - | 5 | - | - | - | - | - | - | - | - | - |
| | B-3 | - | - | 5 | - | - | - | - | - | - | - | - |
| | B'-1 | - | - | - | - | - | - | - | 5 | - | - | - |
| | B'-2 | - | - | - | - | - | - | - | - | 5 | - | - |
| Curing agent | C-1 | - | - | - | 5 | - | 5 | - | - | - | - | - |
| | C-2 | - | - | - | - | 5 | - | - | - | - | - | - |
| Hydrophilic silane | D-1 | - | - | - | - | - | 5 | - | - | - | - | - |
| Curing catalyst | NEOSTANN U-830 | 0.9 | 0.9 | 0.9 | 0.9 | 0.9 | 0.9 | 0.9 | 0.9 | 0.9 | 0.9 | 0.9 |

In Table 1, the abbreviations are as follows.
- A-1:: a methyl ethyl ketone-IPA solution of a hydrophilic copolymer P1 obtained in Synthesis Example 1
- A-2:: a methyl ethyl ketone-IPA solution of a hydrophilic copolymer P2 obtained in Synthesis Example 2
- B-1:: a silane compound represented by formula (8-a) above
- B-2:: a silane compound represented by formula (8-b) above
- B-3:: a silane compound represented by formula (4-a) above
- B'-1:: 3-glycidoxypropyltrimethoxysilane (KBM-403 manufactured by Shin-Etsu Chemical Co., Ltd.)
- B'-2:: 3-isocyanatopropyltrimethoxysilane (KBM-9007 manufactured by Shin-Etsu Chemical Co., Ltd.)
- C-1:: tris-(trimethoxysilylpropyl)isocyanurate (KBM-9659 manufactured by Shin-Etsu Chemical Co., Ltd.)
- C-2:: MKC (registered trademark) Silicate MS51, a partially hydrolyzed oligomer of tetramethoxysilane (manufactured by Mitsubishi Chemical Corporation)
- D-1:: a silane compound represented by formula (11) above NEOSTANN U-830: a dioctyltin catalyst (manufactured by Nitto Kasei Co., Ltd.)

### (3) Evaluation of Storage Stability of Hydrophilic Composition

Immediately after the hydrophilic compositions were prepared as in the above Examples and Comparative Examples, 40 g of each composition was weighed into a 50 mL polyethylene container. The containers were left to stand for 3 months in a constant-temperature chamber (SPHH-201, manufactured by ESPEC Corp.) set at 40°C. After 3 months, the containers were taken out of the dryer and left to stand for 1 hour under conditions of 25°C and 50% relative humidity. Subsequently, the state of each composition was observed. The evaluation criteria for storage stability are as follows.
○: the composition maintained fluidity
×: the composition solidified into a gel-like state

### (4) Formation and Evaluation of Coating Film

Immediately after the hydrophilic compositions were prepared as in the above Examples and Comparative Examples, each composition was applied to a polycarbonate plate using a bar coater (No. 14), and immediately thereafter dried at 120°C for 1 hour to obtain a hydrophilic film. The resulting films were subjected to the following tests. Table 3 shows the results.

### [Fog Resistance]

With respect to each of the above hydrophilic films, breath was blown onto the film, and a case where the surface of the film became cloudy was evaluated as "×", while a case where the surface did not become cloudy was evaluated as "○". Furthermore, the film was left to stand for 1 minute at a position 3 cm above the water surface of a warm water bath at 40°C, and a case where the surface of the film did not become cloudy was evaluated as "⊚", thereby evaluating fog resistance.

### [Water Resistance]

With respect to each of the above hydrophilic films, the film was immersed in tap water at 25°C for 24 hours. After the surface water was removed by blotting with a paper wiper, the film was air-dried at 25°C for 10 minutes, and the fog resistance was evaluated in the same manner as described above.

Subsequently, each film was further immersed in tap water for 240 hours. After the surface water was removed by blotting with a paper wiper, the film was air-dried at 25°C for 10 minutes, and the fog resistance was evaluated in the same manner as described above.

### [Moisture Resistance]

With respect to each of the above hydrophilic films, the film was left to stand for 240 hours in a constant-temperature and humidity chamber set at 50°C and 98% RH (KCL-2000W, manufactured by TOKYO RIKAKIKAI CO., LTD.). Thereafter, the film was air-dried at 25°C for 10 minutes, and the fog resistance was evaluated in the same manner as described above.

**[Table 4]**

| | | Storage stability | Initial fog resistance | Water resistance | | Moisture resistance |
|---|---|---|---|---|---|---|
| | | | | After 24 h water immersion | After 240 h water immersion | 50°C / 98% RH / 240 h |
| Example | 1 | ○ | ⊚ | ⊚ | ○ | ○ |
| | 2 | ○ | ⊚ | ⊚ | ○ | ○ |
| | 3 | ○ | ⊚ | ⊚ | ○ | ○ |
| | 4 | ○ | ⊚ | ⊚ | ○ | ⊚ |
| | 5 | ○ | ⊚ | ⊚ | ○ | ⊚ |
| | 6 | ○ | ⊚ | ⊚ | ⊚ | ⊚ |
| | 7 | ○ | ⊚ | ⊚ | ○ | ○ |
| | 8 | ○ | ⊚ | ⊚ | ○ | ○ |
| | 9 | ○ | ⊚ | ⊚ | ○ | ○ |
| | 10 | ○ | ⊚ | ⊚ | ○ | ⊚ |
| | 11 | ○ | ⊚ | ⊚ | ○ | ⊚ |
| | 12 | ○ | ⊚ | ⊚ | ⊚ | ⊚ |
| Comparative Example | 1 | ○ | ⊚ | × | × | × |
| | 2 | × | ⊚ | ⊚ | ○ | ○ |
| | 3 | × | ⊚ | ⊚ | ○ | ○ |
| | 4 | ○ | ⊚ | × | × | × |
| | 5 | ○ | × | × | × | × |
| | 6 | ○ | ⊚ | × | × | × |
| | 7 | × | ⊚ | ⊚ | ○ | ○ |
| | 8 | × | ⊚ | ⊚ | ○ | ○ |
| | 9 | ○ | ⊚ | × | × | × |
| | 10 | ○ | × | × | × | × |

As shown in Table 4, the compositions of Examples 1 to 12 containing a blocked isocyanate silane compound exhibit good storage stability, and maintain excellent hydrophilicity and fog resistance even after the water resistance tests (24-hour water immersion and 240-hour water immersion) and after the moisture resistance test (50°C, 98% RH, 240 hours). It is also found that the film of Example 6 is particularly excellent in durability.

In contrast, in the films of Comparative Examples 1 and 6, which do not contain a blocked isocyanate silane compound, the fog resistance after 24-hour water immersion is lost, indicating inferior water resistance. In addition, it is found that the compositions of Comparative Examples 2 and 7, which contain an unblocked isocyanate silane compound, and the compositions of Comparative Examples 3 and 8, which contain 3-glycidoxypropyltrimethoxysilane, have poor storage stability.

Furthermore, it is found that the cured films obtained from the compositions of Comparative Examples 4 and 9, in which a blocked isocyanate silane compound is added in an excessive amount, are inferior in fog resistance.

## Claims

1. A hydrophilic composition comprising:
(A) 100 parts by weight of a hydrophilic copolymer containing a constitutional unit represented by formula (1) below and a constitutional unit represented by formula (2) below, and
(B) 0.001 to 10 parts by weight of a blocked isocyanate silane compound, 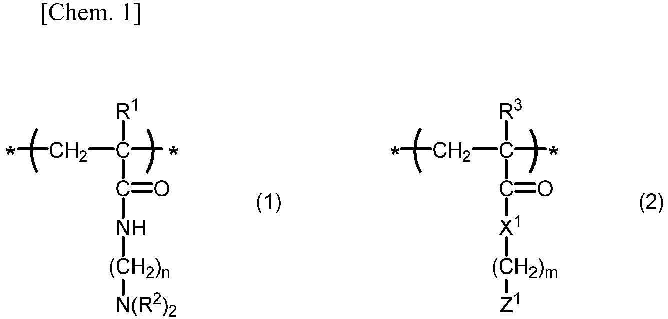 wherein, in formula (1), R¹ represents a hydrogen atom or a methyl group, each R² independently represents an alkyl group having 1 to 6 carbon atoms, and n represents an integer of 1 to 6;
in formula (2), R³ represents a hydrogen atom or a methyl group, X¹ represents -NH- or -O-, Z¹ represents a hydrogen atom, a methyl group, a hydroxyl group, a carboxyl group or an amino group, m represents an integer of 0 to 10 (provided that, when m is 0, Z¹ represents a hydrogen atom or a methyl group), and an asterisk * indicates a bond to an adjacent constitutional unit.

2. The hydrophilic composition according to claim 1, wherein the blocked isocyanate silane compound (B) is represented by formula (3) below, 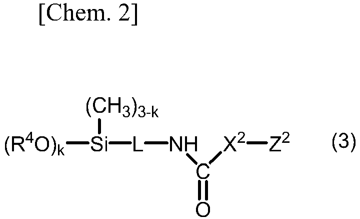 wherein each R⁴ independently represents an alkyl group having 1 to 8 carbon atoms, L represents a divalent linking group, X² represents -O- or -NR⁵-, Z² represents a hydrogen atom or a monovalent organic group, R⁵ represents a hydrogen atom, an alkyl group having 1 to 8 carbon atoms, or a group capable of forming a ring structure by bonding to Z², and k represents an integer of 1 to 3.

3. The hydrophilic composition according to claim 2, wherein the blocked isocyanate silane compound (B) is represented by formula (4) or (5) below, 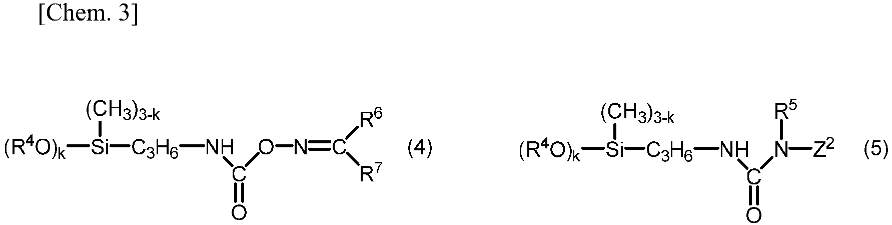 wherein R⁴, R⁵, Z² and k have the same meanings as described above, R⁶ and R⁷ each independently represent a hydrogen atom or a monovalent organic group, and R⁶ and R⁷, or R⁵ and Z², may be linked to each other to form a ring structure.

4. The hydrophilic composition according to claim 1, further comprising at least one compound selected from the group consisting of a polyisocyanate compound, an organosilicon compound represented by formula (6) below, and an organosilicon compound represented by formula (7) below, 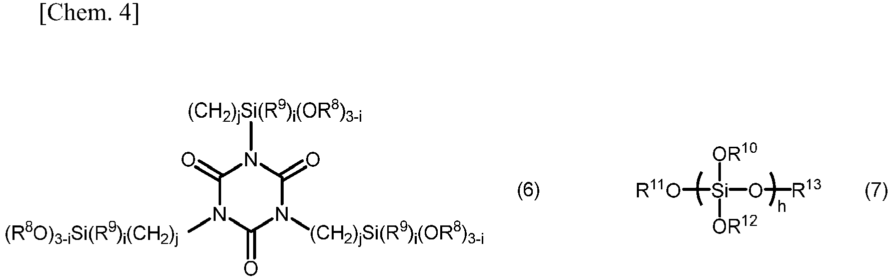 wherein, in formula (6), R⁸ and R⁹ each independently represent an alkyl group having 1 to 10 carbon atoms or an aryl group having 6 to 10 carbon atoms, j represents an integer of 1 to 10, and i represents an integer of 1 to 3; and
in formula (7), R¹⁰, R¹¹, R¹² and R¹³ each independently represent a hydrogen atom or an organic group having 1 to 6 carbon atoms, and h represents an integer of 1 to 20.

5. A coating agent comprising the hydrophilic composition according to any one of claims 1 to 4.

6. A hydrophilic film obtained by curing the coating agent according to claim 5.

7. A coated article comprising a substrate and the hydrophilic film according to claim 6, the hydrophilic film being disposed on at least one surface of the substrate directly or with one or more other layers interposed therebetween.
